# EUROPEAN PATENT APPLICATION

(11) **EP 4 489 096 A1**
(43) Date of publication of application: **08.01.2025**
(21) Application number: 23777631.5
(22) Date of filing: 06.02.2023
(51) Int. Cl.: H01M 4/13

(54) **ELECTRODE PLATE, ELECTRODE ASSEMBLY, BATTERY CELL, BATTERY AND ELECTRIC DEVICE**

(30) Priority: 30.03.2022 CN 202210324931
(71) Applicant: Contemporary Amperex Technology Co., Limited, Ningde, Fujian 352100 (CN)
(72) Inventor: XU, Hu, Ningde, Fujian 352100 (CN); JIN, Haizu, Ningde, Fujian 352100 (CN); NIU, Shaojun, Ningde, Fujian 352100 (CN); ZHAO, Fenggang, Ningde, Fujian 352100 (CN)
(74) Representative: Ran, Handong
(86) International application number: PCT/CN2023/074513
(87) International publication number: WO 2023/185252

(57) **Abstract**

An electrode plate, an electrode assembly, a battery cell, a battery and an electric device. The electrode plate comprises a current collector (10) having a plurality of first surfaces (11); and an active material layer (20), which is arranged on at least one of the plurality of first surfaces (11) and has a second surface (21) away from one side of the current collector (10), wherein the second surface (21) is provided with at least one recess (30) which is sunken relative to the second surface (21); the sum of the volumes of cavities formed by the at least one recess (30) is a first volume V1; a material volume of the active material layer (20) is as a second volume V2; and the first volume V1 and the second volume V2 satisfy: V1:(V1 + V2) = 0.1-30%.

## Description

### CROSS-REFERENCE TO RELATED APPLICATIONS

This application is based on and claims priority to Chinese Patent Application No. 202210324931.1 filed on March 30, 2022, and the content disclosed in this Chinese patent application is incorporated herein by reference in its entirety.

### TECHNICAL FIELD

This application relates to the field of battery technologies, and in particular, to an electrode plate, an electrode assembly, a battery cell, a battery, and an electric apparatus.

### BACKGROUND

A rechargeable battery cell, also referred to as a secondary battery cell, is a battery cell whose active substance can be activated for reuse through charging after the battery cell is discharged. Rechargeable battery cells are widely used in electronic devices such as mobile phones, notebook computers, electric bicycles, electric vehicles, electric airplanes, electric ships, electric toy cars, electric toy ships, electric toy airplanes, and electric tools.

As a critical component of a battery cell, an electrode assembly can be formed by winding positive and negative electrode plates. Wound electrode assemblies have the problems such as lithium precipitation or poor electrolyte infiltration performance that affect the safety performance or cycling performance.

### SUMMARY

According to an aspect of this disclosure, an electrode plate is provided, including: a current collector, having a plurality of first surfaces; and an active substance layer, provided on at least one of the plurality of first surfaces and having a second surface on a side away from the current collector; where the second surface is provided with at least one concave portion that is recessed relative to the second surface, a volume sum of cavity(s) formed by the at least one concave portion is a first volume V1, a material volume of the active substance layer is a second volume V2, and the first volume V1 and the second volume V2 satisfy: V1:(V1+V2)=0.1% to 30%.

In this embodiment, the second surface of the active substance layer is provided with at least one concave portion. The concave portion can store a specific amount of electrolyte. During cycling, it is unlikely to cause lithium precipitation when excessive electrolyte is squeezed out due to swelling of the electrode plate of a battery. In addition, the concave portion reserves a swelling buffer space for swelling of the active substance layer, so that a swelling force in a region corresponding to the concave portion is not too large. During charging and discharging of the battery, the concave portion can also serve as an electrolyte guide channel for guiding reflow of the electrolyte. On this basis, the volume sum of the cavity(s) formed by the concave portion and the material volume of the active substance layer satisfy a specific numerical relationship, so that energy loss caused by the concave portion on the active substance layer can be reduced to some extent while the cycling performance of the battery is improved.

In some embodiments, the first volume V1 and the second volume V2 satisfy: V1:(V1+V2)=0.5% to 5%.

The first volume V1 and the second volume V2 satisfy a preferred range of V1:(V1+V2)=0.5% to 5%, so that the energy loss caused by the concave portion on the active substance layer can be reduced while the cycling performance of the battery is effectively improved.

In some embodiments, the first volume V1 and the second volume V2 satisfy: V1:(V1+V2)=0.5% to 3%.

The first volume V1 and the second volume V2 satisfy a further preferred range of V1:(V1+V2)=0.5% to 3%, so that the energy loss caused by the concave portion on the active substance layer can be effectively reduced while the cycling performance of the battery is more effectively improved.

The first volume V1 and the second volume V2 satisfy V1:(V1+V2)=0.5% to 5%, so that energy loss caused by the concave portions on the active substance layer can be reduced while the cycling performance of the battery is improved.

In some embodiments, an included angle θ between a side wall of the at least one concave portion and the second surface is 5° to 175°.

The included angle between the side wall of the concave portion and the second surface is set to be 5° to 175°, thereby reducing processing difficulty of the concave portion and reducing processing costs while meeting the needs of electrolyte circulation and formation of a swelling space.

In some embodiments, the included angle θ between the side wall of the at least one concave portion and the second surface is 30° to 85°.

The included angle between the side wall of the concave portion and the second surface is set to be 30° to 85°, effectively meeting the needs of electrolyte circulation and formation of a swelling space, reducing the processing difficulty of the concave portion to a greater extent, reducing the processing costs, and reducing or avoiding stress concentration of the side wall, thereby reducing the risk of falling of an active substance during cold pressing of the electrode plate.

In some embodiments, the side wall of the at least one concave portion includes a plane, a convex arc surface, or a concave arc surface.

An oblique side wall of the concave portion is configured to include a plane or an arc surface, so that stress concentration of the side wall can be more effectively reduced or avoided, thereby reducing the risk of falling of an active substance during cold pressing of the electrode plate.

In some embodiments, a micro concave-convex structure is provided at a side wall of the at least one concave portion or at a junction position of the side wall and the second surface.

The micro concave-convex structure located at the side wall of the concave portion or at the junction position of the side wall and the second surface can be conducive to retaining the electrolyte, enhance an infiltration effect of the electrolyte, and improve circulation performance of the electrolyte.

In some embodiments, a width sum of bottom surfaces of the at least one concave portion in a first direction is a first width W1, a width of the active substance layer in the first direction is a second width W2, the first direction is a direction perpendicular to a length direction of the current collector and parallel to the first surface, and the first width W1 and the second width W2 satisfy: W1=3 µm to (2/3)W2.

The width sum of the concave portion in the first direction perpendicular to the length direction of the current collector and parallel to the first surface is set to be not less than 3 µm and not greater than 2/3 of the width of the active substance layer in the first direction, ensuring that a specific amount of electrolyte can be retained in the concave portion and reducing the influence of the concave portion on the energy loss of the active substance layer.

In some embodiments, a distance from a bottom surface of the at least one concave portion to the second surface is a first height H1, a distance from the first surface to the second surface is a second height H2, and the first height H1 and the second height H2 satisfy: H1=3 µm to H2.

The distance from the bottom surface of the concave portion to the second surface is not less than 3 µm to ensure storage of a specific amount of electrolyte in the concave portion and provision of a certain swelling buffer space, and this distance can be as high as the distance between the first surface and the second surface, meaning that the current collector is exposed or substantially exposed from the bottom surface of the concave portion, thereby increasing an electrolyte storage space and the swelling buffer space to a greater extent, and improving the cycling performance of the battery.

In some embodiments, the at least one concave portion extends along a second direction, and the second direction is a direction parallel to the length direction of the current collector.

The concave portion extends along the second direction parallel to the length direction of the current collector, so that the electrolyte can circularly reflow among all wound layers of a wound structure through a channel formed by the concave portion, thereby improving the cycling performance of the battery.

In some embodiments, the at least one concave portion includes two groups of first concave portions, and the two groups of first concave portions are respectively located at positions of the second surface adjacent to two sides extending along the second direction.

For some wound structures of electrode plates, for example, a square wound structure with tabs parallel to a winding direction, two groups of first concave portions are respectively arranged at the two sides of the second surface. This can improve an electrolyte infiltration effect in an upper corner region of such wound structure and provide electrolyte flow channels in this region, so that the electrolyte can be replenished in a climbing manner in this region through the first concave portions, alleviating the problems of local lithium precipitation and insufficient electrolyte infiltration, and improving the cycling performance of the battery.

In some embodiments, the width of the active substance layer in the first direction is a second width W2, the first direction is a direction perpendicular to the length direction of the current collector and parallel to the first surface, a minimum distance between the two groups of first concave portions and the adjacent sides extending along the second direction is a distance D, and the second width W2 and the distance D satisfy: W2=140 mm to 2000 mm, and D=0 mm to 50 mm.

For the foregoing electrode plate that is provided with two groups of first concave portions at the two sides of the second surface respectively, the width of the active substance layer in the first direction is further defined, and the minimum distance between the first concave portions and the adjacent sides is also defined, so that the first concave portions can be arranged according to an actual lithium precipitation position, thereby alleviating the problems of local lithium precipitation and insufficient electrolyte infiltration of the battery to a greater extent.

In some embodiments, the at least one concave portion includes one group of second concave portions, and the one group of second concave portions are located at a middle position of the second surface in the second direction.

For some wound structures of electrode plates, for example, a cylindrical structure, one group of second concave portions are arranged at the middle position of the second surface. This can alleviate the problem of lithium precipitation in the middle of such wound structure. Swelling buffer spaces formed by the second concave portions alleviate swelling force concentration in the middle position, and the second concave portions reduce the electrolyte squeezed out due to swelling of the electrode plate, retain a specific amount of electrolyte, and serve as channels for reflow of the electrolyte, thereby improving the cycling performance of the battery.

In some embodiments, the at least one concave portion further includes two groups of third concave portions, the two groups of third concave portions are respectively located at positions of the second surface adjacent to the two sides extending along the second direction, and the one group of second concave portions are located between the two groups of third concave portions.

For the foregoing wound structures such as a cylindrical structure, a large height of a formed cylindrical battery also causes the problem of insufficient electrolyte infiltration at both ends. Therefore, arranging the two groups of third concave portions at the two sides respectively can effectively alleviate the problems of swelling force concentration and insufficient electrolyte infiltration at the middle and both ends, thereby improving the cycling performance of the battery.

In some embodiments, a width sum of bottom surfaces of the one group of second concave portions and bottom surfaces of the two groups of third concave portions in the first direction is a first width W1, the width of the active substance layer in the first direction is a second width W2, the first direction is a direction perpendicular to the length direction of the current collector and parallel to the first surface, and the first width W1 and the second width W2 satisfy: W2=55 mm to 2000 mm, and W1=3 µm to (2/3)*W2.

The width sum of the second concave portions and the third concave portions is set to be not less than 3 µm and not greater than 2/3 of the width of the active substance layer in the first direction, thereby ensuring that a specific amount of electrolyte can be retained in the concave portions and reducing the influence of the concave portions on energy loss of the active substance layer.

In some embodiments, the second surface includes at least three surface regions divided along the second direction, and the one group of second concave portions are located in a surface region between two surface regions adjacent to two side end portions in the second direction among the at least three surface regions.

For some wound structures, for example, some wound structures of cylindrical batteries, a swelling force of a middle layer of a wound electrode plate is greater than that of several layers on an inner side and several layers on an outer side. Therefore, the second concave portions can be arranged in a surface region that is not at the two ends among the at least three surface regions of the second surface divided in the second direction, and the influence of the concave portions on energy loss of the active substance layer is reduced by reducing the concave portions arranged in the surface regions at the two ends.

In some embodiments, the at least one concave portion includes a plurality of concave portions spaced apart along the first direction.

For some wound structures of electrode plates, for example, a square wound structure with tabs perpendicular to the winding direction, a plurality of concave portions are spaced apart along the first direction, so that the electrolyte can circularly reflow among all wound layers of such wound structure through channels formed by the plurality of concave portions, thereby improving the cycling performance of the battery.

In some embodiments, the at least one concave portion includes a plurality of concave portions spaced apart along the second direction, the second direction is a direction parallel to the length direction of the current collector, each concave portion extends along the first direction, and the first direction is a direction perpendicular to the length direction of the current collector and parallel to the first surface.

For some wound structures of electrode plates, for example, a square wound structure with tabs perpendicular to the winding direction, a plurality of concave portions are spaced apart along the second direction, and the concave portions can be arranged at some positions (such as a bent portion) where the swelling force is large after winding, to effectively provide swelling buffer spaces at these positions, thereby eliminating lithium precipitation at these positions.

In some embodiments, the plurality of concave portions are located in at least one of a horizontal region and a corner region of a square structure formed by winding the electrode plate.

When the electrode plate is wound to form a square structure, the horizontal region and the corner region differ in swelling force concentration degree. The plurality of concave portions spaced apart along the second direction are arranged in at least one of the horizontal region and the corner region of the square structure, so that the electrolyte infiltration performance in different regions can be improved using electrolyte storage flow channels and swelling buffer spaces formed by the concave portions, realizing more balanced electrolyte infiltration at various positions of the battery, thereby improving the overall performance of the battery.

In some embodiments, the active substance layer is arranged on two opposite ones of the plurality of first surfaces, and has two second surfaces respectively located away from the two first surfaces, and the at least one concave portion is arranged on at least one of the two surfaces.

For an electrode plate that is provided with an active substance layer on both two opposite sides of the current collector, the concave portion may be arranged on only the active substance layer on one side or on the active substance layers on both sides, thereby improving the adaptability of arrangement of the concave portion, meeting the needs in use, and minimizing the influence of the concave portion on energy loss.

In some embodiments, the at least one concave portion includes concave portions respectively arranged on the two second surfaces, and the concave portions respectively arranged on the two second surfaces are symmetrical or asymmetrical relative to the current collector.

For the current collector with active substance layers provided on the two opposite first surfaces, the concave portions may be symmetrically arranged on the active substance layers on the two first surfaces, thereby helping to reduce the processing difficulty or making the swelling force more balanced. By being asymmetrically arranged on the active substance layers on the two first surfaces, the concave portions can better adapt to the structures of different wound structures, thereby improving the performance of the battery.

In some embodiments, at least two active substance layers are provided, and the at least one concave portion is formed by an opening of at least a part of layers on a side of the at least two layers away from the current collector.

The concave portion can be formed on the active substance layer in a removal manner or formed in a manner that no material is applied onto specific positions. Accordingly, an opening can be formed by coating patterns of a plurality of active substance layers, so that the concave portion can be obtained more flexibly.

According to an aspect of this disclosure, an electrode assembly is provided, including: a negative electrode plate, a positive electrode plate, and a separator arranged between the negative electrode plate and the positive electrode plate. The negative electrode plate, the separator, and the positive electrode plate are wound along a winding direction to form a wound structure, and at least one of the negative electrode plate and the positive electrode plate is the foregoing electrode plate. The electrode assembly using the foregoing electrode plate has better performance.

In some embodiments, the wound structure is a cylindrical structure, a first square structure with tabs parallel to the winding direction, or a second square structure with tabs perpendicular to the winding direction.

A cylindrical structure or square structure is adaptively used with reference to the arrangement of the concave portions in different surface regions, so as to improve the performance of the battery.

According to an aspect of this disclosure, a battery cell is provided, including the foregoing electrode assembly. The battery cell using the foregoing electrode assembly has better performance.

According to an aspect of this disclosure, a battery is provided, including the foregoing battery cell. The battery using the foregoing battery cell has better performance.

According to an aspect of this disclosure, an electric apparatus is provided, including the foregoing battery. The electric apparatus using the foregoing battery has better performance.

### BRIEF DESCRIPTION OF DRAWINGS

To describe the technical solutions in the embodiments of this disclosure more clearly, the following briefly describes the accompanying drawings required for describing the embodiments of this disclosure. Apparently, the accompanying drawings in the following description show merely some embodiments of this disclosure, and persons of ordinary skills in the art may still derive other drawings from the accompanying drawings without creative efforts.

This disclosure can be understood more clearly according to the following detailed description with reference to the accompanying drawings, in which:
FIG. 1 is a schematic structural diagram of an electric apparatus according to some embodiments of this disclosure;
FIG. 2 is a schematic structural exploded view of a battery according to some embodiments of this disclosure;
FIG. 3 is a schematic structural diagram of a wound structure formed by an electrode assembly according to some embodiments of this disclosure;
FIG. 4 is a schematic structural exploded view of a battery according to some other embodiments of this disclosure;
FIG. 5 is a schematic structural diagram of a wound structure formed by an electrode assembly according to some other embodiments of this disclosure;
FIG. 6 is a schematic three-dimensional structural diagram of an electrode plate according to some embodiments of this disclosure;
FIG. 7 is a schematic structural diagram of a cross section of an electrode plate according to some embodiments of this disclosure;
FIG. 8 is a schematic diagram of a volume relationship between a concave portion and an active substance layer of an electrode plate according to some embodiments of this disclosure;
FIG. 9A to FIG. 12 are respectively schematic structural diagrams of cross sections of an electrode plate according to some other embodiments of this disclosure;
FIG. 13A, FIG. 14A, FIG. 15A, FIG. 16A, FIG. 17A, FIG. 18A, and FIG. 19A are respectively schematic diagrams of distribution of a concave portion on a second surface of an active substance layer of an electrode plate according to some embodiments of this disclosure; and
FIG. 13B, FIG. 14B, FIG. 15B, FIG. 16B, FIG. 17B, FIG. 18B, and FIG. 19B are respectively schematic structural diagrams of wound structures formed by the electrode plates shown in FIG. 13A, FIG. 14A, FIG. 15A, FIG. 16A, FIG. 17A, FIG. 18A, and FIG. 19A.

It should be understood that sizes of various parts shown in the accompanying drawings are not drawn to scale. Additionally, the same or similar reference signs denote the same or similar components.

Description of reference signs:
10. current collector; 100, 100'. battery cell; 11. first surface;
20. active substance layer; 21. second surface; 22. side; 23. end portion; 24. opening; 20a. first layer; 20b. second layer;
30. concave portion; 31. side wall; 32. bottom surface; 33. first concave portion; 34. second concave portion; 35. third concave portion; 36. micro concave-convex structure;
41. first square structure; 42. cylindrical structure; 43. second square structure; 44. tab; 4A. negative electrode plate; 4B. positive electrode plate; 4C. separator; 40A. horizontal region; 40B. corner region;
50. battery; 51. box; 52. end cover; 521. electrode terminal; and
60. vehicle.

### DESCRIPTION OF EMBODIMENTS

The following further describes the embodiments of this disclosure in detail with reference to the accompanying drawings and embodiments. The detailed description and accompanying drawings of the following embodiments are used to exemplarily illustrate the principle of this disclosure rather than to limit the scope of this disclosure, that is, this disclosure is not limited to the described embodiments.

In the descriptions of this disclosure, it should be noted that, unless otherwise stated, "a plurality of" means two or more; and the orientations or positional relationships indicated by the terms "upper", "lower", "left", "right", "inside", "outside", and the like are merely for ease and brevity of description of this disclosure rather than indicating or implying that the means or components mentioned must have specific orientations or must be constructed or manipulated according to particular orientations. These terms shall therefore not be construed as limitations on this disclosure. In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

The words of orientation appearing in the following description all are directions shown in the drawings, and do not limit the specific structure of this disclosure. In the descriptions of this disclosure, it should be also noted that unless otherwise specified and defined explicitly, the terms "mounting", "connection", and "joining" should be understood in a broad sense. For example, these terms may refer to fixed connections, detachable connections, or integral connections, and they may refer to direct connections, or indirect connections through an intermediate medium. Persons of ordinary skills in the art may understand specific meanings of the foregoing terms in this disclosure as appropriate to specific situations.

The following describes in detail some embodiments of the present invention with reference to the accompanying drawings. In absence of conflicts, the features in the following embodiments may be combined.

In some related technologies, the electrode assembly is formed by winding positive and negative electrode plates. The inventors have found through research that the wound electrode assembly swells during charging of the battery, and swelling force is concentrated in some positions of the wound structure, so the electrolyte is squeezed out due to lack of gaps at these positions, resulting in deterioration of infiltration performance. In addition, it is difficult for the electrolyte to reflow at these positions during discharging of the battery. In some related technologies, the problem of swelling force concentration is overcome by setting different compacted densities for different regions of a square wound structure. However, such method cannot provide a swelling space and a channel for guiding the reflow of the electrolyte, and therefore has a limited effect on lithium precipitation and affects the cycling performance of the battery.

In view of this, the embodiments of this disclosure provide an electrode plate, an electrode assembly, a battery cell, a battery, and an electric apparatus, which can improve the performance of the battery.

The electrode plate in the embodiments of this disclosure is applicable to anode plates, cathode plates, and the like in various types of electrode assemblies. The electrode assembly may be a wound structure or a laminated structure. This is not limited in the embodiments of this application either.

The electrode assembly in the embodiments of this disclosure is applicable to various types of battery cells. The battery cells may include lithium-ion secondary batteries, lithium-ion primary batteries, lithium-sulfur batteries, sodium-lithium-ion batteries, sodium-ion batteries, magnesium-ion batteries, or the like. This is not limited in the embodiments of this disclosure. The battery cells may be cylindrical, flat, cuboid, or of other shapes. This is not limited in the embodiments of this application either. Battery cells are typically divided into cylindrical cells, prismatic cells, and pouch cells by packaging methods. This is not limited in the embodiments of this application either.

The battery cell in the embodiments of this disclosure is applicable to various types of batteries. The battery can be configured to supply power to electric devices such as a vehicle, for example, to supply power for operating or driving the vehicle. The battery may include a housing and a battery module, where the housing is configured to provide an accommodating space for the battery module, and the battery module is mounted inside the housing. The housing may be made of a metal material. The battery module may include a plurality of battery cells connected in series, parallel, or series-parallel. The battery cell refers to a smallest unit constituting the battery. The battery cell includes an electrode assembly in which electrochemical reactions can take place.

The battery in the embodiments of this disclosure is applicable to various types of electric apparatuses using batteries. The electric apparatus may be a mobile phone, a portable device, a notebook computer, an electric bicycle, an electric vehicle, a steamship, a spacecraft, an electric toy, an electric tool, or the like. For example, the spacecraft includes an airplane, a rocket, a space shuttle, a spaceship, or the like. The electric toy includes a fixed or mobile electric toy, such as a game console, an electric vehicle toy, an electric ship toy, and an electric airplane toy. The electric tool includes an electric metal cutting tool, an electric grinding tool, an electric assembly tool, and an electric railway-specific tool, such as an electric drill, an electric grinder, an electric wrench, an electric screwdriver, an electric hammer, an electric impact drill, a concrete vibrator, and an electric planer. The foregoing electric apparatus is not specifically limited in the embodiments of the present invention.

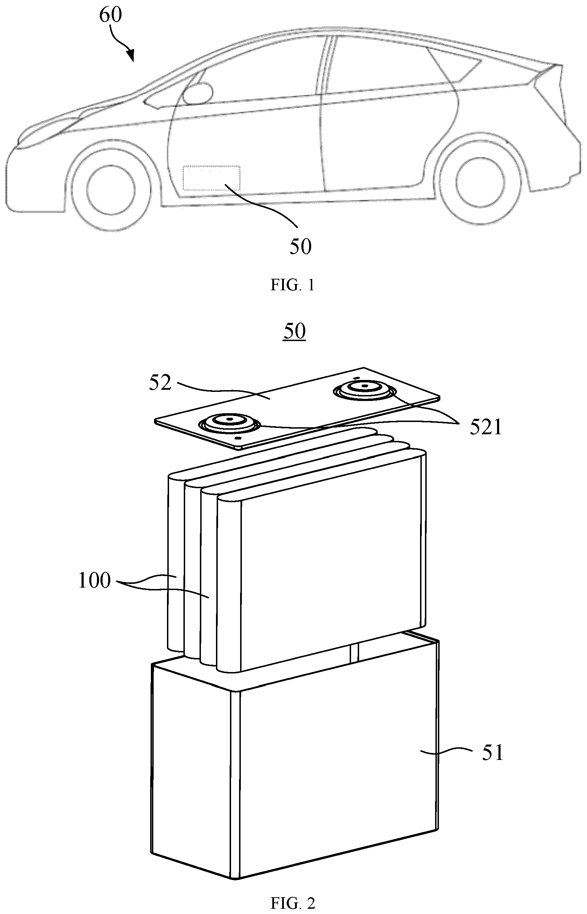

FIG. 1 is a schematic structural diagram of an electric apparatus according to some embodiments of this disclosure. For convenience, an electric apparatus being a vehicle is used as example for description. Referring to FIG. 1, a vehicle 60 is provided with a battery 50 inside, and the battery 50 is arranged at the bottom, front, or rear of the vehicle. The battery 50 supplies power to the vehicle. For example, the battery 50 is used as an operating power source of the vehicle. The battery 50 may be used as a power source for apparatuses such as a new energy vehicle, a ship, and a smart electric appliance cabinet. The battery 50 may alternatively be used as a power supply component to provide electrical energy required by various electric appliance components of an apparatus.

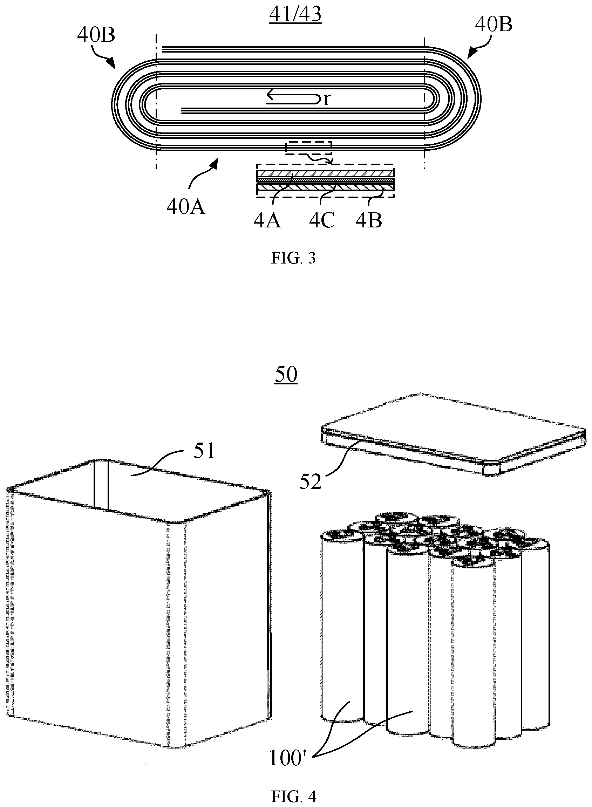

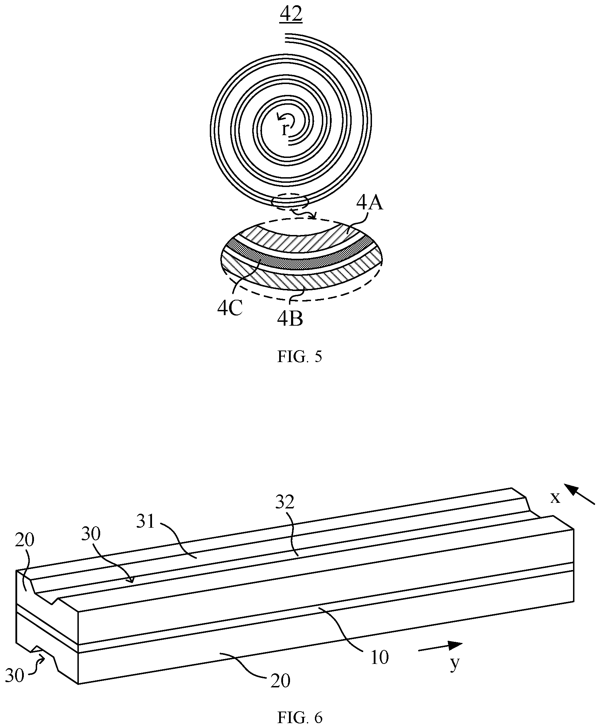

FIG. 2 is a schematic structural exploded view of a battery according to some embodiments of this disclosure. FIG. 3 is a schematic structural diagram of a wound structure formed by an electrode assembly according to some embodiments of this disclosure. FIG. 4 is a schematic structural exploded view of a battery according to some other embodiments of this disclosure. FIG. 5 is a schematic structural diagram of a wound structure formed by an electrode assembly according to some other embodiments of this disclosure.

Referring to FIG. 2 and FIG. 4, in some embodiments, the battery 50 includes a box 51, a sealing cover 52, and one or more battery cells 100 or 100' arranged in the box 51. The battery cells are electrically connected, for example, connected in series, parallel, or series-parallel, so as to achieve electrical performance parameters required for the battery 50. The plurality of battery cells are arranged in rows, where one or more rows of battery cells may be arranged in the box as required. The sealing cover 52 may be provided with electrode terminals 521 respectively electrically connected to anodes and cathodes of the battery cells.

In some embodiments, the battery cells of the battery 50 may be arranged along at least one of a length direction and a width direction of the box. At least one row or one column of battery cells may be provided according to actual requirements. As required, one or more layers of battery cells may alternatively be arranged along a height direction of the battery 50.

In some embodiments, the plurality of battery cells may be connected in series, parallel, or series-parallel to form a battery module first, and then a plurality of battery modules are connected in series, parallel, or series-parallel to form an entirety that is accommodated in the box 51. In some other embodiments, all the battery cells are directly connected in series, parallel, or series-parallel, and then an entirety formed by all the battery cells is accommodated in the box.

Referring to FIG. 2 to FIG. 5, in some embodiments, the battery cell 100 or 100' may include a housing, an end cover, and an electrode assembly. The housing has a cavity for accommodating the electrode assembly, and an end portion of the housing may be opened for arranging an end cover assembly. The electrode assembly is mounted in the cavity of the housing. The battery cell 100 or 100' includes not only the electrode assembly, the end cover, and the housing but also an electrolyte.

Referring to FIG. 3 and FIG. 5, in some embodiments, the electrode assembly includes a first electrode plate 4A, a second electrode plate 4B, and a separator 4C arranged between the first electrode plate 4A and the second electrode plate 4B. The first electrode plate 4A, the separator 4C, and the second electrode plate 4B are wound along a winding direction r to form a wound structure. The wound structure 41 or 43 shown in FIG. 3 is pressed into a square structure after winding, with a horizontal region 40A located in the center and corner regions 40B located on left and right sides of the horizontal region 40A. Accordingly, the housing used for the battery cell including the electrode assembly is a square housing structure. The wound structure 42 shown in FIG. 5 forms a cylindrical structure (for example, a hollow cylindrical structure) after winding. Accordingly, the housing used for the battery cell including the electrode assembly is a cylindrical housing structure.

Working of the battery cell 100 or 100' mainly relies on migration of metal ions between the positive electrode plate and the negative electrode plate. The separator 4C may be made of PP (polypropylene, polypropylene), PE (polyethylene, polyethylene), or the like.

The positive electrode plate includes a positive electrode current collector and a positive electrode active substance layer. The positive electrode active substance layer is applied on a surface of the positive electrode current collector. A part of the positive electrode current collector uncoated with the positive electrode active substance layer protrudes out of a part of the positive electrode current collector coated with the positive electrode active substance layer, and the part of the positive electrode current collector uncoated with the positive electrode active substance layer serves as a positive tab. A lithium-ion battery is used as an example, for which, the positive electrode current collector may be made of aluminum and the positive electrode active substance may be lithium cobaltate, lithium iron phosphate, ternary lithium, lithium manganate, or the like.

The negative electrode plate includes a negative electrode current collector and a negative electrode active substance layer. The negative electrode active substance layer is applied on a surface of the negative electrode current collector. A part of the negative electrode current collector uncoated with the negative electrode active substance layer protrudes out of a part of the negative electrode current collector coated with the negative electrode active substance layer, and the part of the negative electrode current collector uncoated with the negative electrode active substance layer serves as a negative tab. The negative electrode current collector may be made of copper, and the negative electrode active substance may be carbon, silicon, or the like. To allow a large current to pass through without any fusing, a plurality of positive tabs are provided and stacked together, and a plurality of negative tabs are provided and stacked together.

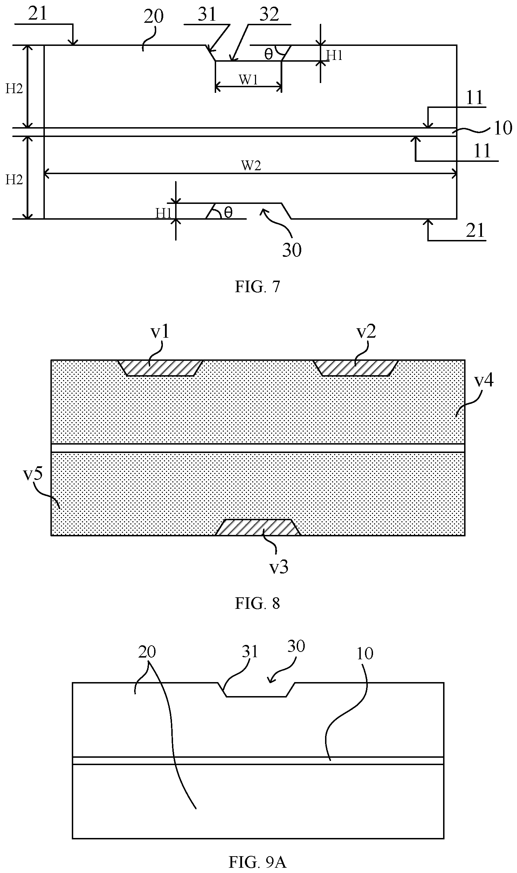

FIG. 6 is a schematic three-dimensional structural diagram of an electrode plate according to some embodiments of this disclosure. FIG. 7 is a schematic structural diagram of a cross section of an electrode plate according to some embodiments of this disclosure. FIG. 8 is a schematic diagram of a volume relationship between a concave portion and an active substance layer of an electrode plate according to some embodiments of this disclosure. Referring to FIG. 6 to FIG. 8, an embodiment of this disclosure provides an electrode plate including: a current collector 10 and an active substance layer 20. The current collector 10 has a plurality of first surfaces 11. The active substance layer 20 is provided on at least one of the plurality of first surfaces 11 and has a second surface 21 on a side away from the current collector 10. The second surface 21 is provided with at least one concave portion 30 that is recessed relative to the second surface 21.

The second surface of the active substance layer is provided with at least one concave portion. The concave portion can store a specific amount of electrolyte. During cycling, it is unlikely to cause lithium precipitation when excessive electrolyte is squeezed out due to swelling of the electrode plate of a battery. In addition, the concave portion reserves a swelling buffer space for swelling of the active substance layer, so that a swelling force in a region corresponding to the concave portion is not too large. Moreover, during charging and discharging of the battery, the concave portion can also serve as an electrolyte guide channel for guiding reflow of the electrolyte, thereby improving the cycling performance of the battery.

Referring to FIG. 8, a volume sum of cavity(s) formed by the at least one concave portion 30 is a first volume V1, a material volume of the active substance layer 20 is a second volume V2, and the first volume V1 and the second volume V2 satisfy: V1:(V1+V2)=0.1% to 30%.

For example, in FIG. 8, three regions with oblique section lines respectively correspond to three concave portions. Here, v1, v2, and v3 respectively illustrate volumes of cavities formed by the three concave portions, so the first volume V1=v1+v2+v3. Two of the three concave portions are located on the second surface of the active substance layer on an upper side of the current collector in the figure, and the remaining one concave portion is located on the second surface of the active substance layer on a lower side of the current collector in the figure. A material volume of the upper active substance layer is v4, and a material volume of the lower active substance layer is v5, so the second volume V2=v4+v5. V1:(V1+V2) is equivalent to a proportion of a volume of all the concave portions in a total volume of the active substance layers without the concave portions.

Since the provision of the concave portions is equivalent to reducing the material of the active substance layer, a larger volume proportion of the concave portions indicates a higher energy loss of the active substance layer. In this embodiment, the first volume V1 and the second volume V2 are set to satisfy: V1:(V1+V2)=0.1% to 30%. This can reduce energy loss caused by the concave portions on the active substance layer to some extent while improving the cycling performance of the battery.

In some embodiments, the first volume V1 and the second volume V2 satisfy: V1:(V1+V2)=0.5% to 5%. As compared with the previous embodiment, in this embodiment, a maximum value of V1:(V1+V2) is further defined to not exceed 5%. This can minimize energy loss caused by less active substance layer due to the concave portions and can effectively improve the cycling performance of the battery.

Furthermore, the first volume V1 and the second volume V2 may preferably satisfy: V1:(V1+V2)=0.5% to 3%. This preferred range can effectively reduce energy loss caused by the concave portions on the active substance layer while more effectively improving the cycling performance of the battery.

Referring to FIG. 7, in some embodiments, an included angle θ between a side wall 31 of the at least one concave portion 30 and the second surface 21 is 5° to 175°. The side wall and bottom surface of the concave portion jointly enclose a cavity structure that can accommodate the electrolyte. An excessively large or excessively small included angle between the side wall of the concave portion and the second surface affects the functions of the concave portion and the processing difficulty of the concave portion to some extent. Setting the included angle to be 5° to 175° can reduce the processing difficulty of the concave portion and reduce the processing costs while meeting the needs of electrolyte circulation and formation of a swelling space.

In some embodiments, the included angle θ between the side wall 31 of the at least one concave portion 30 and the second surface 21 is 30° to 85°. The included angle between the side wall of the concave portion and the second surface is set to be 30° to 85°, effectively meeting the needs of electrolyte circulation and formation of a swelling space, reducing the processing difficulty of the concave portion to a greater extent, reducing the processing costs, and reducing or avoiding stress concentration of the side wall, thereby reducing the risk of falling of an active substance during cold pressing of the electrode plate.

Referring to FIG. 6 and FIG. 7, in some embodiments, a width sum of bottom surface(s) 32 of the at least one concave portion 30 in the first direction x is a first width W1, and a width of the active substance layer 20 in the first direction x is a second width W2. The first direction x is a direction perpendicular to a length direction of the current collector 10 and parallel to the first surface 11, and the first width W1 and the second width W2 satisfy: W1=3 µm to (2/3)*W2.

The width sum of the concave portion in the first direction perpendicular to the length direction of the current collector and parallel to the first surface is set to be not less than 3 µm and not greater than 2/3 of the width of the active substance layer in the first direction, ensuring that a specific amount of electrolyte can be retained in the concave portion and reducing the influence of the concave portion on the energy loss of the active substance layer.

Still referring to FIG. 6 and FIG. 7, in some embodiments, a distance from the bottom surface 32 of the at least one concave portion 30 to the second surface 21 is a first height H1, a distance from the first surface 11 to the second surface 21 is a second height H2, and the first height H1 and the second height H2 satisfy: H 1=3 µm to H2.

The distance from the bottom surface of the concave portion to the second surface is not less than 3 µm to ensure storage of a specific amount of electrolyte in the concave portion and provision of a certain swelling buffer space, and this distance can be as high as the distance between the first surface and the second surface, meaning that the current collector is exposed or substantially exposed from the bottom surface of the concave portion, thereby increasing an electrolyte storage space and the swelling buffer space to a greater extent, and improving the cycling performance of the battery.

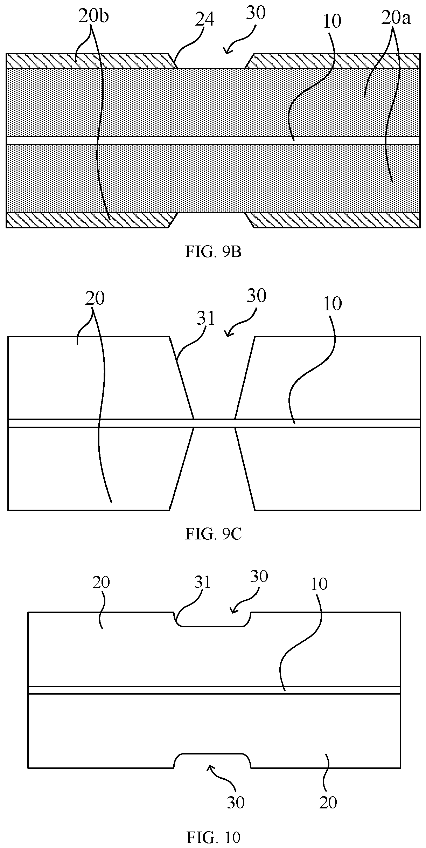

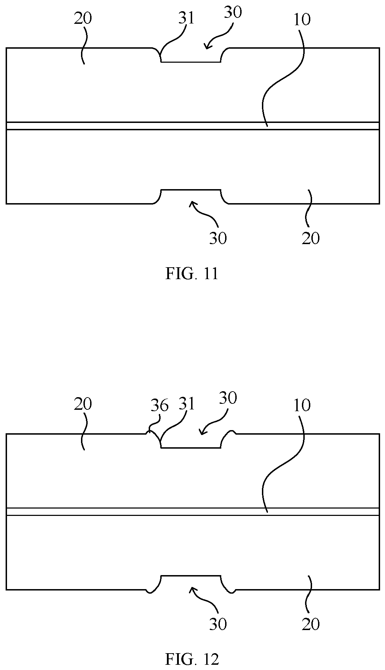

FIG. 9A to FIG. 12 are respectively schematic structural diagrams of a cross section of an electrode plate according to some other embodiments of this disclosure. Referring to FIG. 7 and FIG. 9A to FIG. 9C, in some embodiments, the side wall 31 of the at least one concave portion 30 includes a plane. Referring to FIG. 10, in some embodiments, the side wall 31 of the at least one concave portion 30 includes a concave arc surface. Referring to FIG. 11, in some embodiments, the side wall 31 of the at least one concave portion 30 includes a convex arc surface. In some other embodiments, the side wall of the at least one concave portion 30 may be a combination of any two or three of a plane, a concave arc surface, and a convex arc surface, a combination of planes at different angles, or a combination of concave arc surfaces or convex arc surfaces with different curvatures. An oblique side wall of the concave portion is configured to include a plane or an arc surface, so that stress concentration of the side wall can be more effectively reduced or avoided, thereby reducing the risk of falling of an active substance during cold pressing of the electrode plate.

Referring to FIG. 7 to FIG. 9C, the active substance layer 20 is provided on two opposite ones of the plurality of first surfaces 11, and has two second surfaces 21 respectively located away from the two first surfaces 11. The at least one concave portion 30 is arranged on at least one of the two surfaces 21. For example, in FIG. 9A, the concave portion 30 may be arranged on only the second surface of the active substance layer on one side of the current collector. For another example, in FIG. 7 and FIG. 8, the at least one concave portion 30 includes concave portions 30 respectively arranged on the two surfaces 21. Referring to FIG. 7, the concave portions 30 respectively arranged on the two second surfaces 21 may be symmetrical relative to the current collector 10. This helps to reduce the processing difficulty or make the swelling force more balanced.

Referring to FIG. 8, in some other embodiments, the concave portions 30 respectively arranged on the two second surfaces 21 may be asymmetrical relative to the current collector, so as to adapt to the structures of different wound structures, thereby improving the performance of the battery.

The concave portion on the second surface of the active substance layer may be formed by laser or chemical etching after formation of the active substance layer, or formed by other methods. In some embodiments, at least two active substance layers 20 are provided, and the at least one concave portion 30 is formed by an opening of at least a part of layers on a side of the at least two layers away from the current collector 10.

For example, referring to FIG. 9B, at least two active substance layers are provided, such as a first layer 20a and a second layer 20b in FIG. 9B. The first layer 20a is formed on the first surface of the current collector 10, and the second layer 20b formed on the surface of a side of the first layer 20a away from the current collector 10 may have an opening 24. The opening 24 and a surface of the first layer 20a exposed from the opening 24 form the concave portion 30.

Referring to FIG. 9C, in some embodiments, a region corresponding to the concave portion may be uncoated with the active substance layer during coating, so that the current collector can be exposed from the bottom surface of the concave portion. This can increase the electrolyte storage space and the swelling buffer space to a greater extent, thereby improving the cycling performance of the battery.

Referring to FIG. 12, in some embodiments, the side wall 31 of the at least one concave portion 30 or a junction position of the side wall 31 and the second surface 21 is provided with a micro concave-convex structure 36. A concave-convex depth (for example, 0.01 µm to 0.3 µm) of the micro concave-convex structure is generally far less than a depth of the concave portion. The micro concave-convex structure located at the side wall of the concave portion or at the junction position of the side wall and the second surface can be conducive to retaining the electrolyte, enhance an infiltration effect of the electrolyte, and improve circulation performance of the electrolyte.

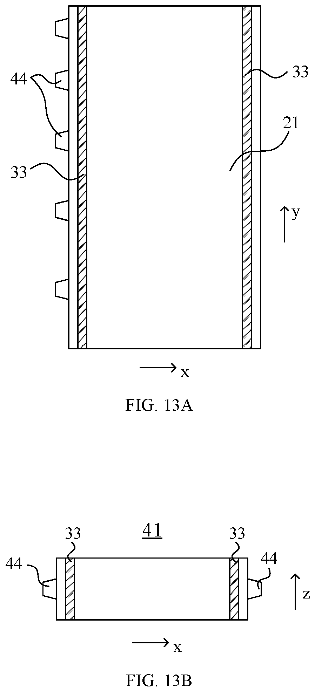

FIG. 13A, FIG. 14A, FIG. 15A, FIG. 16A, FIG. 17A, FIG. 18A, and FIG. 19A are respectively schematic diagrams of distribution of a concave portion on a second surface of an active substance layer of an electrode plate according to some embodiments of this disclosure. FIG. 13B, FIG. 14B, FIG. 15B, FIG. 16B, FIG. 17B, FIG. 18B, and FIG. 19B are respectively schematic structural diagrams of wound structures formed by the electrode plates shown in FIG. 13A, FIG. 14A, FIG. 15A, FIG. 16A, FIG. 17A, FIG. 18A, and FIG. 19A.

Referring to FIG. 13A, FIG. 14A, FIG. 15A, FIG. 16A, FIG. 17A, and FIG. 18A, in some embodiments, the at least one concave portion 30 extends along a second direction y, and the second direction y is a direction parallel to the length direction of the current collector 10. The concave portion extends along the second direction parallel to the length direction of the current collector, so that the electrolyte can circularly reflow among all wound layers of the wound structure through a channel formed by the concave portion, thereby improving the cycling performance of the battery.

Different wound structures of the electrode plate differ in swelling force concentration positions during swelling caused by charging and also differ in infiltration degree of the electrolyte at various positions. Therefore, for different wound structures of the electrode plate, this disclosure provides different embodiments to improve the cycling performance of the battery.

Referring to FIG. 13A and FIG. 13B, in some embodiments, the at least one concave portion 30 includes two groups of first concave portions 33, and the two groups of first concave portions 33 are respectively located at positions of the second surface 21 adjacent to two sides 22 extending along the second direction y. Each group of first concave portions may include one or more elongated first concave portions extending along the second direction y.

FIG. 13B shows a wound structure formed by winding the electrode plate shown in FIG. 13A as at least one of a cathode plate and an anode plate along the second direction y. Such wound structure is a first square structure 41 with tabs 44 parallel to a winding direction y. The tabs 44 extend from left and right ends of the wound structure, respectively. A square battery cell formed by the first square structure 41 is vertically placed along an axis z, and its left and right sides are bent portions, so the infiltration effect of the electrolyte is usually poor. Arranging two groups of first concave portions at the two sides respectively can improve an electrolyte infiltration effect in an upper corner region of such wound structure and provide electrolyte flow channels in this region, so that the electrolyte can be replenished in a climbing manner in this region through the first concave portions, alleviating the problems of local lithium precipitation and insufficient electrolyte infiltration, and improving the cycling performance of the battery.

Referring to FIG. 7 and FIG. 13A, in some embodiments, the width of the active substance layer 20 in the first direction x is a second width W2, the first direction x is a direction perpendicular to the length direction of the current collector 10 and parallel to the first surface 11, a minimum distance between the two groups of first concave portions 33 and the adjacent sides 22 extending along the second direction y is a distance D, and the second width W2 and the distance D satisfy: W2=140 mm to 2000 mm, and D=0 mm to 50 mm.

For the foregoing electrode plate that is provided with two groups of first concave portions at the two sides of the second surface respectively, the width range of the active substance layer in the first direction is further defined, and the minimum distance between the first concave portions and the adjacent sides is defined to be 0 mm to 50 mm, so that the first concave portions can be arranged according to an actual lithium precipitation position, thereby alleviating the problems of local lithium precipitation and insufficient electrolyte infiltration of the battery to a greater extent.

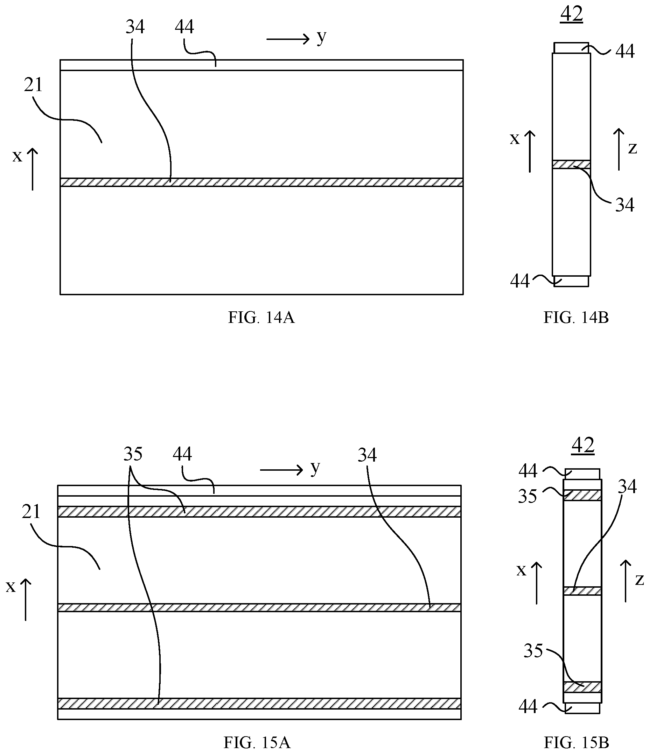

Referring to FIG. 14A and FIG. 14B, in some embodiments, the at least one concave portion 30 includes one group of second concave portions 34, and the one group of second concave portions 34 are located at a middle position of the second surface 21 in the second direction y. Each group of second concave portions may include one or more elongated second concave portions extending along the second direction y.

FIG. 14B shows a wound structure formed by winding the electrode plate shown in FIG. 14A as at least one of a cathode plate and an anode plate along the second direction y. This wound structure is a cylindrical structure 42 (for example, a hollow cylindrical structure). The tabs 44 extend from upper and lower ends of the wound structure, respectively. A cylindrical battery cell formed by the cylindrical structure 42 is vertically placed along an axis z, with concentrated swelling force in the middle of the axis z direction. During battery charging, the electrolyte is likely to be squeezed out due to swelling, thereby reducing an infiltration degree of the electrolyte at this position. One group of second concave portions are arranged at the middle position of the second surface. This can alleviate the problem of lithium precipitation in the middle of such wound structure. Swelling buffer spaces formed by the second concave portions alleviate swelling force concentration in the middle position, and the second concave portions reduce the electrolyte squeezed out due to swelling of the electrode plate, retain a specific amount of electrolyte, and serve as channels for reflow of the electrolyte, thereby improving the cycling performance of the battery.

Referring to FIG. 15A and FIG. 15B, as compared with FIG. 14A and FIG. 14B, in some embodiments, the at least one concave portion 30 further includes two groups of third concave portions 35, the two groups of third concave portions 35 are respectively located at positions of the second surface 21 adjacent to the two sides 22 extending along the second direction y, and the one group of second concave portions 34 are located between the two groups of third concave portions 35. Each group of third concave portions may include one or more elongated third concave portions extending along the second direction y.

FIG. 15B is a wound structure formed by winding the electrode plate shown in FIG. 15A as at least one of a cathode plate and an anode plate along the second direction y. This wound structure is a cylindrical structure 42 (for example, a hollow cylindrical structure). A cylindrical battery cell formed by the cylindrical structure 42 is vertically placed along an axis z, with concentrated swelling force at the middle portion in the axis z direction. In addition, a large height of a formed cylindrical battery also causes the problem of insufficient electrolyte infiltration at both ends. Therefore, arranging the two groups of third concave portions at the two sides respectively can effectively alleviate the problems of swelling force concentration and insufficient electrolyte infiltration at the middle and both ends, thereby improving the cycling performance of the battery.

Referring to FIG. 7 and FIG. 15A, a width sum of bottom surfaces 32 of the one group of second concave portions 34 and bottom surfaces of the two groups of third concave portions 35 in the first direction x is a first width W1, the width of the active substance layer 20 in the first direction x is a second width W2, the first direction x is a direction perpendicular to the length direction of the current collector 10 and parallel to the first surface 11, and the first width W1 and the second width W2 satisfy: W2=55 mm to 2000 mm, and W1=3 µm to (2/3)*W2.

The width sum of the second concave portions and the third concave portions is set to be not less than 0.5 mm and not greater than 2/3 of the width of the active substance layer in the first direction, thereby ensuring that a specific amount of electrolyte can be retained in the concave portions and reducing the influence of the concave portions on energy loss of the active substance layer.

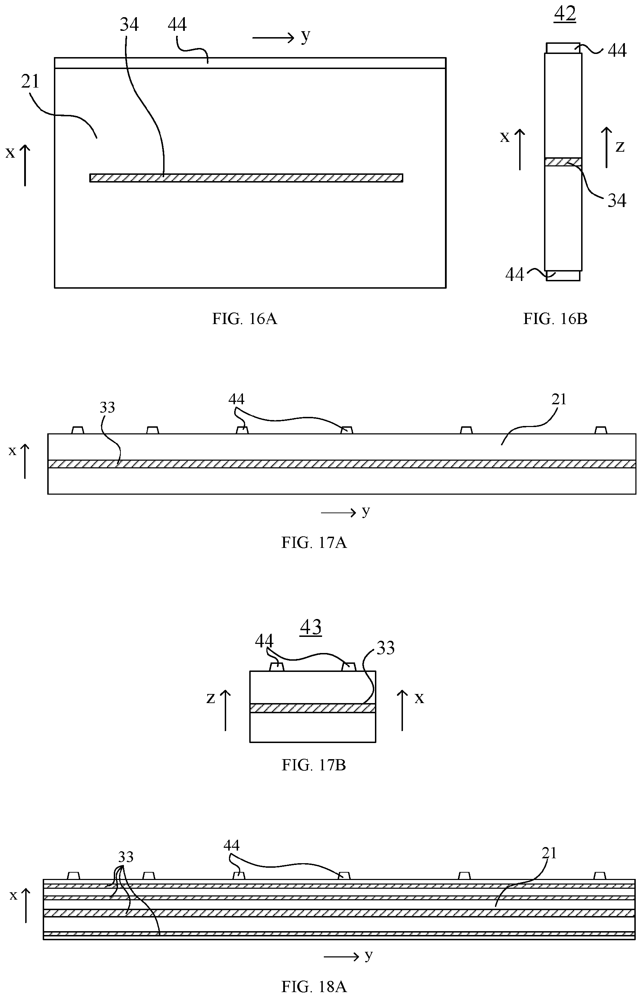

Referring to FIG. 16A and FIG. 16B, in some embodiments, the second surface 21 includes at least three surface regions divided along the second direction y, and the one group of second concave portions 34 are located in a surface region between two surface regions adjacent to two side end portions 23 in the second direction y among the at least three surface regions.

FIG. 16B is a wound structure formed by winding the electrode plate shown in FIG. 16A as at least one of a cathode plate and an anode plate along the second direction y. This wound structure is a cylindrical structure 42 (for example, a hollow cylindrical structure). A cylindrical battery cell formed by the cylindrical structure 42 is vertically placed along an axis z. A cylindrical structure with a hollow interior has a small internal swelling force, and the swelling force of outer electrode plate wound layers is also small. Therefore, the swelling force is mainly concentrated in the middle electrode plate wound layers. The second concave portions are arranged in a surface region that is not at the two ends and has relatively concentrated swelling force, and surface regions at the two ends may be provided with no concave portion. This can not only balance the swelling forces of inner and outer layers of the wound structure but also reduce adverse impacts on energy loss of the active substance layer caused by provision of more concave portions.

In some other embodiments, the two groups of third concave portions 35 may alternatively be located in a surface region between two surface regions adjacent to two side end portions 23 in the second direction y among the at least three surface regions.

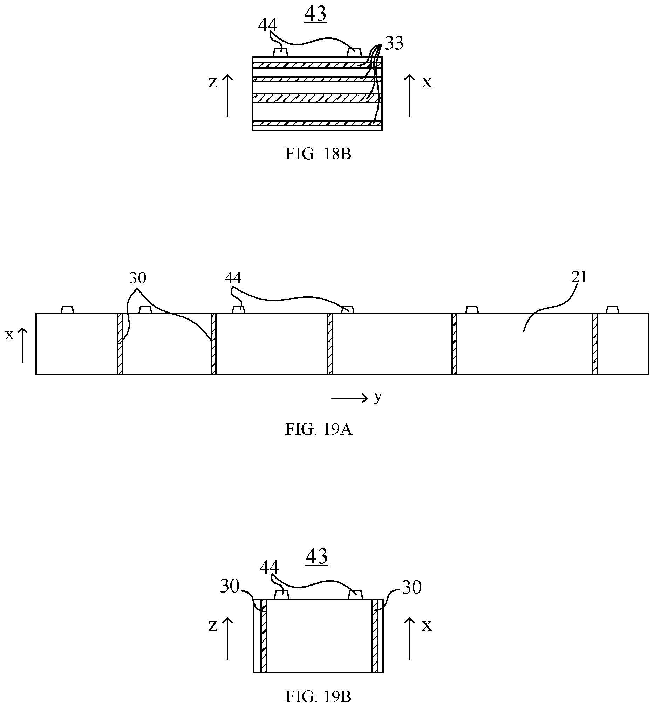

Referring to FIG. 18A and FIG. 18B, in some embodiments, the at least one concave portion 30 includes a plurality of concave portions 30 spaced apart along the first direction x. Referring to FIG. 17A and FIG. 17B, in some other embodiments, the at least one concave portion may include only one concave portion 30 arranged in the first direction.

FIG. 17B and FIG. 18B respectively show wound structures formed by winding the electrode plates shown in FIG. 17A and FIG. 18A as at least one of a cathode plate and an anode plate along the second direction y. This wound structure is a second square structure 43 with tabs 44 perpendicular to the winding direction y. The tabs 44 both extend from an upper side of the wound structure. A square battery cell formed by the second square structure 43 is vertically placed along an axis z. A plurality of concave portions are spaced apart along the first direction, so that the electrolyte can circularly reflow among all wound layers of the wound structure through channels formed by the concave portions, thereby improving the cycling performance of the battery.

Considering that the swelling force is relatively concentrated in bent portions on left and right sides of such second square structure, and the electrolyte is likely to be squeezed out due to swelling during battery charging, thereby reducing the infiltration degree of the electrolyte at this position. Therefore, referring to FIG. 19A and FIG. 19B, in some embodiments, the at least one concave portion 30 includes a plurality of concave portions 30 spaced apart along the second direction y, the second direction y is a direction parallel to the length direction of the current collector 10, each concave portion 30 extends along the first direction x, and the first direction x is a direction perpendicular to the length direction of the current collector 10 and parallel to the first surface 11.

FIG. 19B shows a wound structure formed by winding the electrode plate shown in FIG. 19A as at least one of a cathode plate and an anode plate along the second direction y. This wound structure is a second square structure 43 with tabs 44 perpendicular to the winding direction y. The tabs 44 both extend from an upper side of the wound structure. The swelling force is relatively concentrated in the bent portions at two ends of such second square structure. Concave portions are arranged in corresponding layers at these positions, so that swelling buffer spaces can be effectively achieved at these positions to eliminate lithium precipitation at these positions.

Referring to FIG. 19B and FIG. 3, in some embodiments, the plurality of concave portions may be located in at least one of a horizontal region 40A and a corner region 40B of a square structure formed by winding the electrode plate. For example, in FIG. 19B, some of the concave portions are located at a position of the horizontal region 40A adjacent to the corner region 40B. For another example, the concave portions may all be arranged in the corner region 40B to effectively improve the electrolyte infiltration effect in the corner region. Alternatively, some of the concave portions are arranged in the corner region 40B and some are arranged in the horizontal region 40A. In this way, the swelling force of each position of the overall wound structure can be more uniform, and the processing and winding difficulty is reduced.

The widths of the concave portions in different layers of the wound structure may be the same or different. For example, the widths of the concave portions in the electrode plate layers corresponding to the corner region 40B progressively increase from inside to outside, so as to match the trend of the corner region size gradually increasing from inside to outside. The concave portions may alternatively be appropriately arranged at a position of the horizontal region 40A adjacent to the corner region 40B (for example, a position that is 1 mm to 12 mm away from a dividing line between the corner region and the horizontal region). Inner electrode plate layers may alternatively be provided with no concave portion.

For another example, the widths of the concave portions in the electrode plate layers corresponding to the corner region 40B are equal, where the concave portions located in an outermost electrode plate layer may substantially overlap with the corner region 40. Correspondingly, the concave portions in the several inner electrode plate layers may cover not only the corner region 40B but also part of the horizontal region 40A.

The various embodiments of the electrode plate described above are applicable to various types of electrode assemblies. Referring to FIG. 3 and FIG. 5, this disclosure provides an electrode assembly including: a negative electrode plate 4A, a positive electrode plate 4B, and a separator 4C arranged between the negative electrode plate 4A and the positive electrode plate 4B, where the negative electrode plate 4A, the separator 4C, and the positive electrode plate 4B are wound along a winding direction to form a wound structure, and at least one of the negative electrode plate 4A and the positive electrode plate 4B is any one of the foregoing embodiments of the electrode plate.

In the foregoing embodiments, the wound structure may be a cylindrical structure 42 (for example, a hollow cylindrical structure), a first square structure 41 with tabs parallel to the winding direction, or a second square structure 43 with tabs perpendicular to the winding direction. A cylindrical structure or square structure is adaptively used with reference to the arrangement of the concave portions in different surface regions, thereby effectively improving the performance of the battery.

According to an aspect of this disclosure, a battery cell is provided, including the foregoing electrode assembly. The battery cell using the foregoing electrode assembly has better performance such as improving the cycling performance of the battery and reducing energy loss.

According to an aspect of this disclosure, a battery is provided, including the foregoing battery cell. The battery using the foregoing battery cell has better performance, and can improve the cycling performance of the battery and reduce energy loss.

According to an aspect of this disclosure, an electric apparatus is provided, including the foregoing battery. The electric device using the foregoing battery has better performance, saves more power, and has higher reliability.

Although this disclosure has been described with reference to preferred embodiments, various modifications to this disclosure and replacements of the components therein with equivalents can be made without departing from the scope of this disclosure. In particular, as long as there is no structural conflict, the various technical features mentioned in the embodiments can be combined in any manner. This disclosure is not limited to the specific embodiments disclosed in this specification, but includes all technical solutions falling within the scope of the claims.

## Claims

1. An electrode plate, comprising:
a current collector (10), having a plurality of first surfaces (11); and
an active substance layer (20), provided on at least one of the plurality of first surfaces (11) and having a second surface (21) on a side away from the current collector (10);
wherein the second surface (21) is provided with at least one concave portion (30) that is recessed relative to the second surface (21), a volume sum of cavity(s) formed by the at least one concave portion (30) is a first volume V1, a material volume of the active substance layer (20) is a second volume V2, and the first volume V1 and the second volume V2 satisfy: V1:(V1+V2)=0.1% to 30%.

2. The electrode plate according to claim 1, wherein the first volume V1 and the second volume V2 satisfy: V1:(V1+V2)=0.5% to 5%.

3. The electrode plate according to claim 2, wherein the first volume V1 and the second volume V2 satisfy: V1:(V1+V2)=0.5% to 3%.

4. The electrode plate according to any one of claims 1 to 3, wherein an included angle θ between a side wall (31) of the at least one concave portion (30) and the second surface (21) is 5° to 175°.

5. The electrode plate according to claim 4, wherein the included angle θ between the side wall (31) of the at least one concave portion (30) and the second surface (21) is 30° to 85°.

6. The electrode plate according to claim 5, wherein the side wall (31) of the at least one concave portion (30) comprises a plane, a convex arc surface, or a concave arc surface.

7. The electrode plate according to any one of claims 1 to 6, wherein a micro concave-convex structure (36) is provided at a side wall (31) of the at least one concave portion (30) or a junction position of the side wall (31) and the second surface (21).

8. The electrode plate according to any one of claims 1 to 7, wherein a width sum of bottom surface(s) (32) of the at least one concave portion (30) in a first direction (x) is a first width W1, a width of the active substance layer (20) in the first direction (x) is a second width W2, the first direction (x) is a direction perpendicular to a length direction of the current collector (10) and parallel to the first surface (11), and the first width W1 and the second width W2 satisfy: W1=3 µm to (2/3)*W2.

9. The electrode plate according to any one of claims 1 to 8, wherein a distance from a bottom surface (32) of the at least one concave portion (30) to the second surface (21) is a first height H1, a distance from the first surface (11) to the second surface (21) is a second height H2, and the first height H1 and the second height H2 satisfy: H 1=3 µm to H2.

10. The electrode plate according to any one of claims 1 to 9, wherein the at least one concave portion (30) extends along a second direction (y), and the second direction (y) is a direction parallel to a length direction of the current collector (10).

11. The electrode plate according to claim 10, wherein the at least one concave portion (30) comprises two groups of first concave portions (33), and the two groups of first concave portions (33) are respectively located at positions of the second surface (21) adjacent to two sides (22) extending along the second direction (y).

12. The electrode plate according to claim 11, wherein a width of the active substance layer (20) in the first direction (x) is a second width W2, the first direction (x) is a direction perpendicular to the length direction of the current collector (10) and parallel to the first surface (11), a minimum distance between the two groups of first concave portions (33) and adjacent sides (22) extending along the second direction (y) is a distance D, and the second width W2 and the distance D satisfy: W2=140 mm to 2000 mm, and D=0 mm to 50 mm.

13. The electrode plate according to claim 10, wherein the at least one concave portion (30) comprises one group of second concave portions (34), and the one group of second concave portions (34) are located at a middle position of the second surface (21) in the second direction (y).

14. The electrode plate according to claim 13, wherein the at least one concave portion (30) further comprises two groups of third concave portions (35), the two groups of third concave portions (35) are respectively located at positions of the second surface (21) adjacent to two sides (22) extending along the second direction (y), and the one group of second concave portions (34) are located between the two groups of third concave portions (35).

15. The electrode plate according to claim 14, wherein a width sum of bottom surfaces (32) of the one group of second concave portions (34) and bottom surfaces of the two groups of third concave portions (35) in the first direction (x) is a first width W1, a width of the active substance layer (20) in the first direction (x) is a second width W2, the first direction (x) is a direction perpendicular to a length direction of the current collector (10) and parallel to the first surface (11), and the first width W1 and the second width W2 satisfy: W2=55 mm to 2000 mm, and W1=3 µm to (2/3)*W2.

16. The electrode plate according to any one of claims 13 to 15, wherein the second surface (21) comprises at least three surface regions divided along the second direction (y), and the one group of second concave portions (34) are located in a surface region between two surface regions adjacent to two side end portions (23) in the second direction (y) among the at least three surface regions.

17. The electrode plate according to claim 10, wherein the at least one concave portion (30) comprises a plurality of concave portions (30) spaced apart in the first direction (x).

18. The electrode plate according to claim 1, wherein the at least one concave portion (30) comprises a plurality of concave portions (30) spaced apart along a second direction (y), the second direction (y) is a direction parallel to a length direction of the current collector (10), each concave portion (30) extends along the first direction (x), and the first direction (x) is a direction perpendicular to the length direction of the current collector (10) and parallel to the first surface (11).

19. The electrode plate according to claim 18, wherein the plurality of concave portions are located in at least one of a horizontal region (40A) and a corner region (40B) of a square structure formed by winding the electrode plate.

20. The electrode plate according to any one of claims 1 to 19, wherein the active substance layer (20) is arranged on two opposite ones of the plurality of first surfaces (11) and has two second surfaces (21) respectively located away from the two first surfaces (11), and the at least one concave portion (30) is arranged on at least one of the two surfaces (21).

21. The electrode plate according to claim 20, wherein the at least one concave portion (30) comprises concave portions (30) respectively arranged on the two second surfaces (21), and the concave portions (30) respectively arranged on the two second surfaces (21) are symmetrical or asymmetrical relative to the current collector (10).

22. The electrode plate according to any one of claims 1 to 21, wherein at least two active substance layers (20) are provided, and the at least one concave portion (30) is formed by an opening of at least a part of layers on a side of the at least two layers away from the current collector (10).

23. An electrode assembly, comprising: a negative electrode plate (4A), a positive electrode plate (4B), and a separator (4C) arranged between the negative electrode plate (4A) and the positive electrode plate (4B), wherein the negative electrode plate (4A), the separator (4C), and the positive electrode plate (4B) are wound along a winding direction to form a wound structure, and at least one of the negative electrode plate (4A) and the positive electrode plate (4B) is the electrode plate according to any one of claims 1 to 22.

24. The electrode assembly according to claim 23, wherein the wound structure is a cylindrical structure (42), a first square structure (41) with tabs parallel to the winding direction, or a second square structure (43) with tabs perpendicular to the winding direction.

25. A battery cell, comprising the electrode assembly according to claim 23 or 24.

26. A battery, comprising the battery cell according to claim 25.

27. An electric apparatus, comprising the battery according to claim 26.
